# FASCICULE DE BREVET EUROPEEN

(11) **EP 3 589 544 B1**
(45) Date de publication et mention de la délivrance du brevet: **24.02.2021**
(21) Numéro de dépôt: 18712950.7
(22) Date de dépôt: 02.03.2018
(51) Int. Cl.: B64C 39/06

(54) **AÉRONEF À VOILURE RHOMBOÉDRIQUE À GÉOMÉTRIE VARIABLE**
FLUGZEUG MIT RHOMBOEDRISCHEM, VARIABLER GEOMETRIE- FLÜGEL
AIRCRAFT WITH RHOMBOEDRIC WING ARRANGEMENT WITH VARIABLE GEOMETRY

(30) Priorité: 02.03.2017 FR 1751711
(43) Date de publication de la demande: 08.01.2020
(73) Titulaire: Fly-R, 97460 Saint-Paul (FR)
(72) Inventeur: VARIGAS, François, 97460 Saint-Paul (FR)
(74) Mandataire: Cornuejols, Georges
(86) Numéro de dépôt international: PCT/FR2018/050486
(87) Numéro de publication internationale: WO 2018/158549

(56) Documents cités:
- US-A- 5 899 410
- US-A1- 2004 217 230
- US-A1- 2010 282 917
- US-B2- 7 131 611

## Description

### DOMAINE TECHNIQUE

La présente invention concerne un aéronef à voilure rhomboédrique à géométrie variable. Elle s'applique, en particulier, aux avions dont la voilure à géométrie variable lui permet d'agencer les ailes dans des configurations adaptées à un vaste domaine et régimes de vol.

### ETAT DE LA TECHNIQUE

Depuis l'avènement de l'aéronautique, les concepteurs se sont toujours préoccupés de dessiner un avion ayant un domaine de vol le plus vaste possible tout en minimisant la masse de la structure. On rappelle ici que le domaine de vol d'un aéronef est l'espace en vitesse air, facteur de charge et altitude à l'intérieur duquel il peut fonctionner en sécurité.

Avec les nouvelles technologies, les nouveaux matériaux et les moyens de calculs toujours plus puissants, de nouveaux concepts d'avions font leur apparition.

Les ailes rhomboédriques, ou closes, ou en diamant, ou à fente, ou annulaires, etc..., ont été considérée dès les débuts de l'aviation. Ce n'est qu'assez récemment que des études aérodynamiques poussées, grâce aux nouveaux outils de calculs et de simulations numériques, ont démontré leur gain potentiel en matière de traînée induite, même si ce gain reste relativement modeste (de l'ordre de quelques pourcents). Par contre la masse de la structure est fortement réduite (environ 30% de gain) de par le contreventement naturel des ailes entre elles mais au prix d'une rigidité accrue.

Pour ce qui est de l'augmentation du domaine de vol, les différents volets et appendices additionnels de la voilure ont l'inconvénient d'augmenter le poids de l'aéronef et/ou la traînée.

On connaît le document US 2010/282917, qui décrit, comme illustré dans sa figure 3 et dans ses paragraphes 41 et 44, un l'aéronef dont les ailes sont dans des plans parallèles (configuration dite « biplane »). Cette voilure possède donc les inconvénients des voilures biplanes.

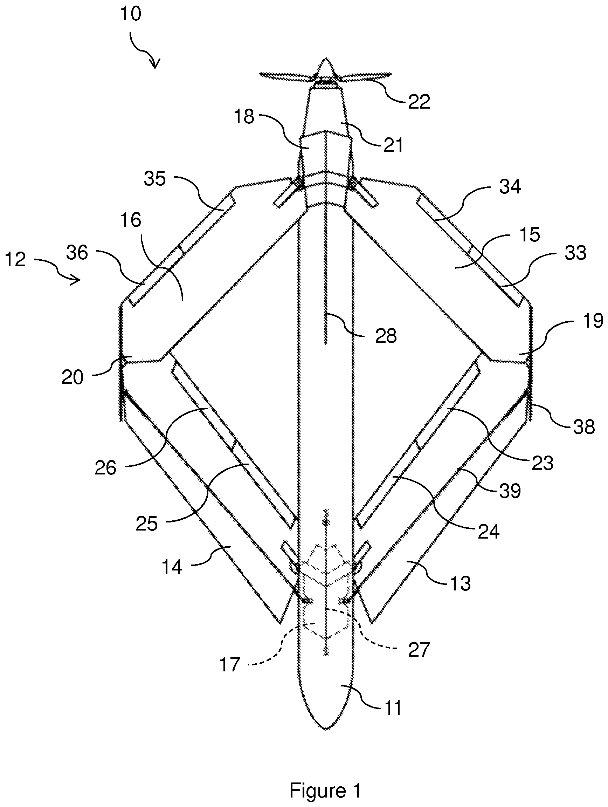

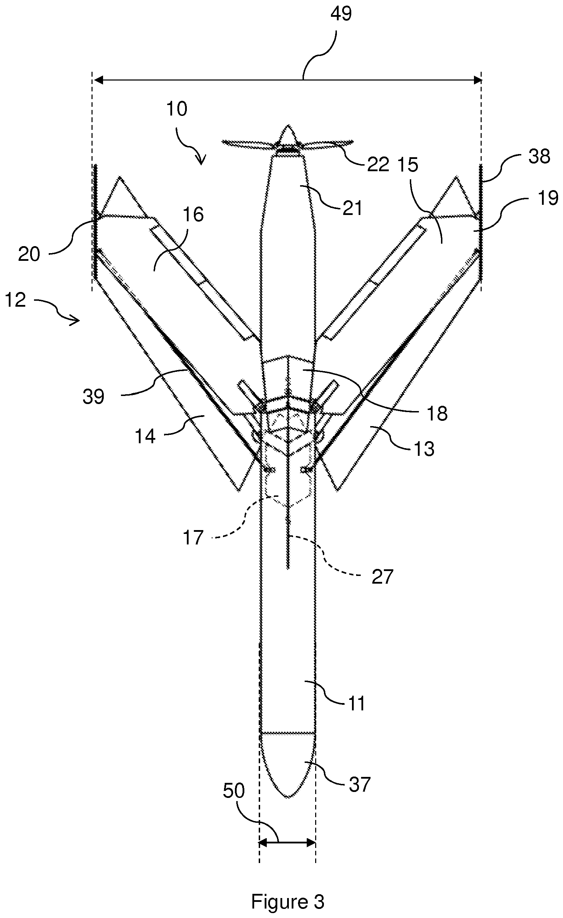

On connaît aussi le document US 5 899 410, qui décrit un aéronef présentant une configuration de voilure plane, toutes les ailes étant dans le même plan, comme illustré dans ses figures 1 et 3 et décrit dans la partie « domaine de l'invention » et dans l'abrégé. Cette voilure possède donc les inconvénients des voilures monoplan.

On connaît aussi le document US 2004/217230, qui présente une configuration de voilure plane : toutes les ailes sont dans le même plan, comme illustré en figures 1 et 16. Cette voilure possède donc les inconvénients des voilures monoplan.

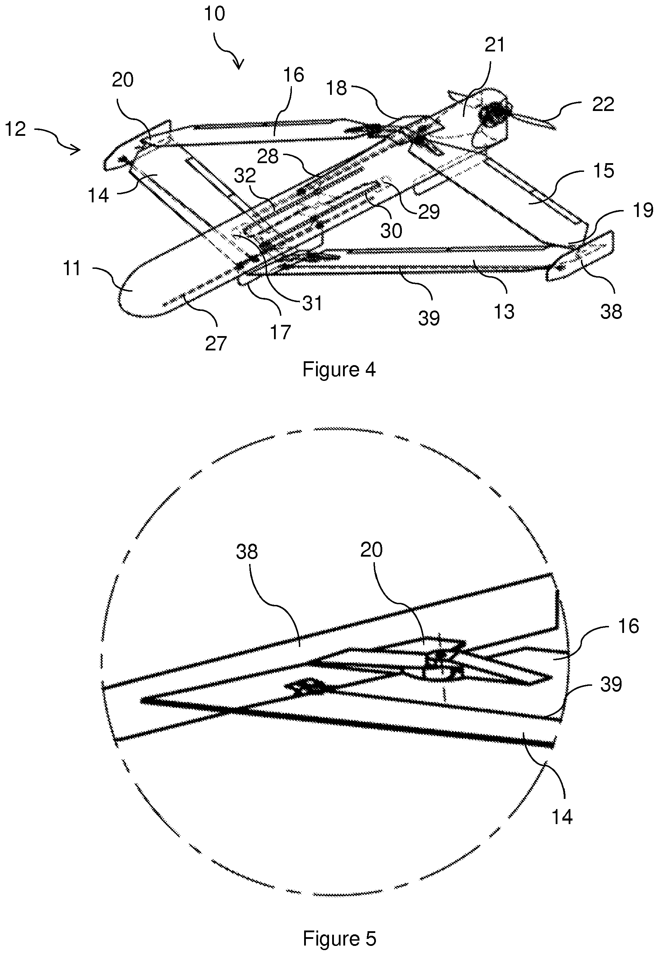

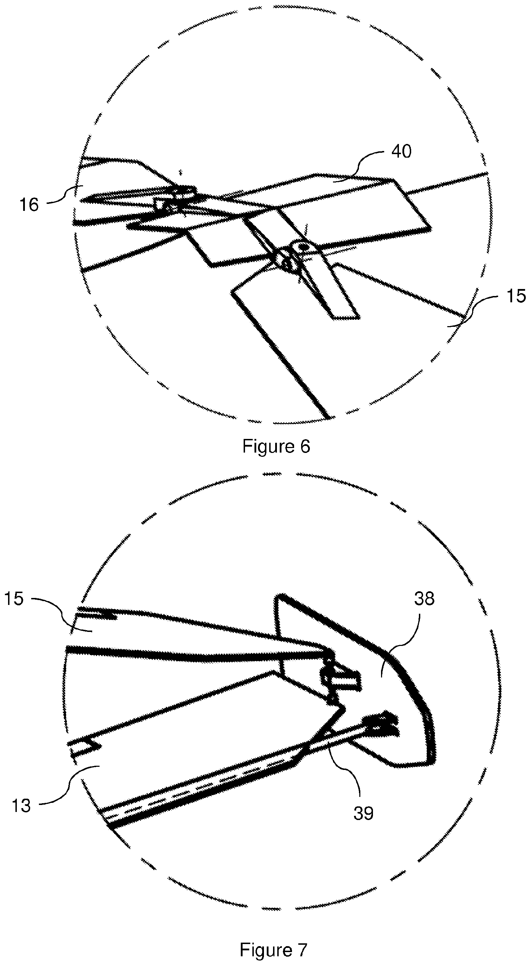

On connaît aussi le document US 7 131 611, qui présente une configuration de voilure plane, toutes les ailes étant dans le même plan, comme illustré en figures 4 et 7. Cette voilure possède donc les inconvénients des voilures monoplan.

### EXPOSE DE L'INVENTION

La présente invention vise à remédier à tout ou partie de ces inconvénients.

A cet effet, selon un premier aspect, la présente invention vise un aéronef comportant un fuselage et une voilure rhomboédrique comportant des ailes avant montées sur un support d'emplanture avant et des ailes arrière montées sur un support d'emplanture arrière, les ailes avant et arrière se rejoignant en leur extrémité dans un angle dièdre, les supports d'emplanture d'ailes étant positionnés respectivement, en dessous et au-dessus du fuselage, dans lequel :
- une extrémité de chaque aile avant est articulée à une extrémité d'une aile arrière et
- au moins un des supports d'emplanture d'ailes est mobile le long du fuselage.

Ainsi, pour remédier aux inconvénients présentés précédemment, tout en agrandissant de manière significative le domaine de vol et les performances globales d'un avion, l'invention consiste en une voilure de type rhomboédrique dont les ailes avant et les ailes arrière sont à géométrie variable tout en restant jointes à leurs extrémités pour obtenir des formes très différentes. De plus, la modification de la géométrie de la voilure permet un transport aisé de l'aéronef objet de la présente invention.

Dans des modes de réalisation, la longueur des ailes arrières est strictement inférieure à la longueur des ailes avant, l'angle formé entre l'axe longitudinal principal du fuselage et l'axe principal des ailes arrières étant en conséquence, dans toutes configurations de vol, plus obtus que l'angle formé entre l'axe longitudinal principal du fuselage et l'axe principal des ailes avant.

Grâce à ces dispositions, les ailes avant sont toujours en configuration de flèche et les ailes arrières peuvent prendre une configuration en flèche inversée, droite, c'est-à-dire perpendiculaire au fuselage, ou en flèche non inversée, ainsi que dans toutes les configurations intermédiaires.

Dans des modes de réalisation, au moins un des supports d'emplanture d'ailes est configuré pour se rapprocher de l'autre support d'emplanture d'ailes pour que les ailes avant forment les hypoténuses de triangles rectangles formés par les ailes avant, les ailes arrières et le fuselage, l'axe principal de chacune des ailes arrières étant, dans ces triangles rectangles, perpendiculaire à l'axe principal longitudinal du fuselage.

Dans des modes de réalisation, au moins un des supports d'emplanture d'ailes est configuré pour se rapprocher de l'autre support d'emplanture d'ailes pour que les ailes avant et les ailes arrières soient en flèches, non inversées.

Grâce à ces dispositions, la flèche des ailes avant peut être élevée et l'envergure réduite, notamment pour les configurations de vol à plus haute vitesse.

Dans des modes de réalisation, au moins un des supports d'emplanture d'ailes est configuré pour s'éloigner de l'autre support d'emplanture d'ailes pour que l'envergure de l'aéronef soit inférieure à la somme de quatre fois la largeur maximale des ailes avant et des ailes arrières, d'une part, et de la largeur du fuselage, d'autre part.

Grâce à ces dispositions, l'aéronef peut être transporté, voire catapulté, avec une configuration d'ailes resserrée contre le fuselage, avec une envergure minimale. Après catapultage dans cette configuration à envergure minimale, l'envergure est augmentée par rapprochement des emplantures d'ailes.

Dans des modes de réalisation, l'aéronef objet de l'invention comporte un moyen d'adaptation de la position de chaque emplanture d'ailes aux conditions de vol.

Grâce à ces dispositions, au cours du vol, en fonction de la charge embarquée, de la vitesse, de l'altitude, de l'autonomie visée, de la manœuvrabilité visée, le moyen d'adaptation modifie la configuration géométrique de la voilure en déplaçant au moins une emplanture d'aile.

Dans des modes de réalisation, l'aéronef objet de l'invention comporte des moyens de morphisme de la voilure, pour modifier l'inclinaison des axes de rotation des ailes et provoquer une variation d'incidence, le moyen d'adaptation commandant les moyens de morphisme.

Grâce à ces dispositions, au cours du vol, en fonction de la charge embarquée, de la vitesse, de l'altitude, de l'autonomie visée, de la manœuvrabilité visée, le moyen d'adaptation modifie l'incidence de la voilure.

Dans des modes de réalisation particulier, chacun des supports d'emplanture d'ailes est mobile le long du fuselage.

Grâce à ces dispositions, la configuration géométrique de la voilure est adaptable à toute répartition de masse ou de poussée.

Dans des modes de réalisation, au moins un support d'emplanture d'ailes est mis en mouvement par un moteur, une unité centrale actionnant ledit moteur.

Grâce à ces dispositions, le centre de poussée de la voilure peut être déplacé d'avant en arrière sur le fuselage, indépendamment de la géométrie de la voilure dictée par la distance entre les supports d'emplanture d'aile.

Dans des modes de réalisation, au moins un support d'emplanture d'ailes comporte un rail et une vis sans fin.

Grâce à ces dispositions, le déplacement du support d'emplanture d'ailes est aisé.

Dans des modes de réalisation, à chaque jonction des extrémités d'ailes avant et arrière est positionnée une surface verticale de fermeture des extrémités d'ailes.

Ces surfaces verticales de fermeture des extrémités d'ailes permettent de réduire la trainée de la voilure.

Dans des modes de réalisation, une tringle interne à l'une des ailes maintient le plan principal de la surface verticale de fermeture des extrémités d'ailes parallèle à l'axe principal du fuselage.

Grâce à ces dispositions, les jonctions des ailes avant et arrière peuvent être simplifiées puisqu'elles n'ont pas comme fonction de maintenir le plan des surfaces verticales de fermeture des extrémités d'ailes en position.

Dans des modes de réalisation, les jonctions des extrémités des ailes avant et arrière comportent des pivots.

Dans des modes de réalisation, au moins un support d'emplanture d'ailes avant comporte au moins un pivot.

Dans des modes de réalisation, l'aéronef objet de la présente invention comporte des moyens de morphisme de la voilure, pour modifier l'inclinaison des axes de rotation des ailes et provoquer une variation d'incidence.

Dans des modes de réalisation, le fuselage ne porte aucun empennage vertical.

### BREVE DESCRIPTION DES FIGURES

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement et en vue de dessus, un mode de réalisation particulier de l'aéronef objet de la présente invention, dans une configuration de voilure intermédiaire,
- la figure 2 représente, schématiquement et en vue de dessus, l'aéronef illustré en figure 1, dans une configuration de voilure à angle de flèche réduit,
- la figure 3 représente, schématiquement et en vue de dessus, l'aéronef illustré en figures 1 et 2, dans une configuration à ailes superposées,
- la figure 4 représente, schématiquement et en perspective, l'aéronef illustré en figures 1 à 3, dans la configuration illustrée en figure 2,
- la figure 5 représente, schématiquement et en perspective, une articulation mobile de support d'emplanture d'ailes avant,
- la figure 6 représente, schématiquement et en perspective, une articulation mobile de support d'emplanture d'ailes arrière,
- la figure 7 représente, schématiquement et en perspective, une articulation d'extrémité d'ailes avant et arrière et
- la figure 8 représente, sous forme de logigramme, des étapes de fonctionnement de l'aéronef illustré en figures 1 à 7.

### DESCRIPTION DE MODES DE REALISATION DE L'INVENTION

On note, dès à présent, que les figures en sont pas à l'échelle. Pour simplifier la compréhension des dessins et schémas les ailes et surfaces verticales à la jonction des extrémités d'ailes sont représentées par des surfaces de faible épaisseur.

On rappelle qu'une voilure rhomboédrique (ou rhomboïdale) est une variante d'ailes en tandem dont les extrémités se rejoignent. L'aile avant fixée sur la partie basse du fuselage est en flèche arrière, et l'aile arrière fixée sur la partie haute de la dérive est en flèche avant ; l'aile totale, dite jointe, forme une surface projetée continue en losange creux

On observe, en figure 1, un aéronef 10 comportant un fuselage 11 et une voilure 12 de forme rhomboédrique. La voilure 12 comporte une aile avant gauche 13, une aile avant droite 14, une aile arrière gauche 15 et une aile arrière droite 16. Les ailes avant 13 et 14 se rejoignent sur un support d'emplanture 17 d'ailes avant situé en dessous du fuselage 11. Les ailes arrière 15 et 16 se rejoignent sur un support d'emplanture 18 d'ailes arrière. Les ailes gauches 13 et 15 se rejoignent sur une jonction d'ailes gauche 19 située au-dessus du fuselage 11. Les ailes droites 14 et 16 se rejoignent sur une jonction d'ailes droite 20. Les ailes 13, 14, 15 et 16 représentées dans les figures présentent une forme générale en rectangle. Elles sont ainsi à corde constante, leurs bords d'attaque et de fuite étant parallèles. Bien entendu, la présente invention ne se limite pas à ce type de forme générale mais s'étend à toutes les formes d'ailes, hormis les ailes delta.

Les ailes avant 13 et 14 présentent des surfaces de contrôle 23 à 26, ailerons ou volets. Les ailes arrière 15 et 16 présentent des surfaces de contrôle 33 à 36, ailerons ou volets.

Un moteur 21 entraîne en rotation une hélice 22 pour propulser l'aéronef 10. L'aéronef 10 représenté dans les figures est propulsé par une hélice située à l'arrière du fuselage 11. Bien entendu, la présente invention ne se limite pas à ce type de propulsion mais s'étend aux autres types de moteur et autres types de disposition d'un ou plusieurs moteurs sur le fuselage, par exemple à l'avant ou dans des nacelles latérales portées par le fuselage.

La jonction des extrémités des ailes gauches 19 est articulée, ce qui autorise un mouvement angulaire relatif de l'aile avant gauche 13 par rapport à l'aile arrière gauche 15. De la même manière, la jonction des extrémités des ailes droites 20 est articulée, ce qui autorise un mouvement angulaire relatif de l'aile avant droite 14par rapport à l'aile arrière droite 16.

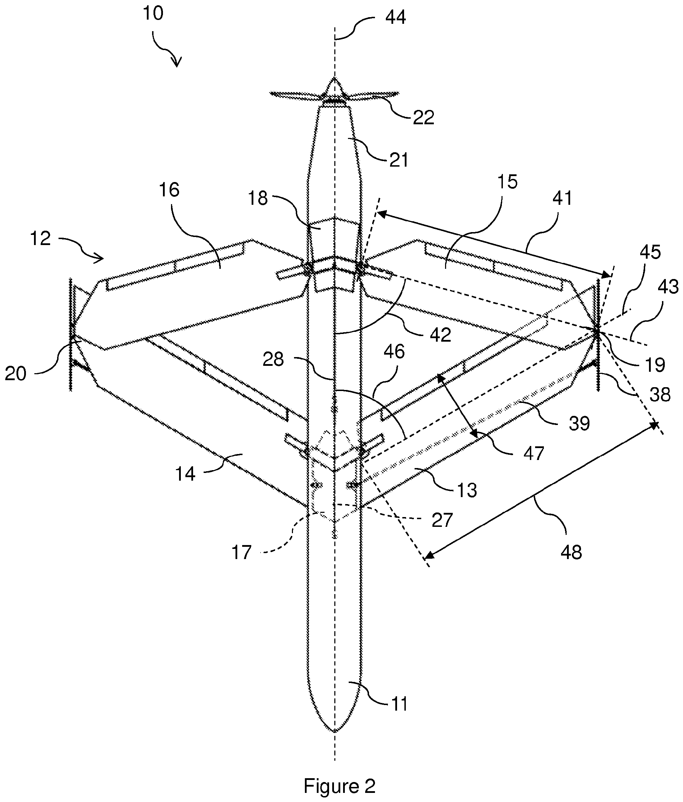

Au moins un des supports d'emplanture d'ailes 17 et 18 est mobile le long du fuselage 11, ce qui permet une déformation de la voilure 12 rhomboédrique, une variation de la flèche de chaque aile et donc de l'envergure de la voilure 12. Grâce à ces variations, la voilure 12 peut être adaptée à différents domaines de vol. On observe, en figure 2, l'aéronef 10, dans une configuration de voilure à angle de flèche réduit et envergure étendue. On observe, en figure 3, l'aéronef 10 dans une configuration de voilure à ailes superposées, grand angle de flèche et envergure réduite.

Comme on l'observe en figures 1 à 3, notamment la figure 2, dans le mode de réalisation qui y est représenté, la longueur 41 des ailes arrières 15 et 16 est strictement inférieure à la longueur 48 des ailes avant 13 et 14. L'angle 42 formé entre l'axe longitudinal principal 44 du fuselage 11 et l'axe principal 43 des ailes arrières est, en conséquence, dans toutes configurations de vol, plus obtus que l'angle 46 formé entre l'axe longitudinal principal du fuselage et l'axe principal 45 des ailes avant. On note que la longueur des ailes est la plus grande dimension des ailes mesurée parallèlement à leur axe principal.

Ainsi, les ailes avant 13 et 14 sont toujours en configuration de flèche et les ailes arrières 15 et 16 peuvent prendre une configuration en flèche inversée (figure 1), droite (intermédiaire entre les configurations représentées en figures 2 et 3), c'est-à-dire perpendiculaire au fuselage, ou en flèche non inversée (figure 3), ainsi que dans toutes les configurations intermédiaires.

Dans le mode de réalisation illustré en figures 1 à 3, au moins un des supports d'emplanture d'ailes 17 et 18 (les deux supports d'emplanture d'aile, dans les figures 1 à 3) est configuré pour se rapprocher de l'autre support d'emplanture d'ailes pour que les ailes avant 13 et 14 forment les hypoténuses de triangles rectangles formés par les ailes avant, les ailes arrières 15 et 16 et le fuselage 11. L'axe principal 43 de chacune des ailes arrières est, dans ces triangles rectangles, perpendiculaire à l'axe principal longitudinal 44 du fuselage.

Comme on l'observe en figure 3, au moins un des supports d'emplanture d'ailes 17 et 18 (les deux supports d'emplanture d'aile, dans les figures 1 à 3) est configuré pour se rapprocher de l'autre support d'emplanture d'ailes pour que les ailes avant 13 et 14 et les ailes arrières 15 et 16 soient en flèches, non inversées.

Ainsi, la flèche des ailes avant 13 et 14 peut être élevée et l'envergure 49 réduite, notamment pour les configurations de vol à plus haute vitesse.

Comme on l'observe en figures 2 et 3, au moins un des supports d'emplanture d'ailes 17 et 18 (les deux supports d'emplanture d'aile, dans les figures 1 à 3) est configuré pour s'éloigner de l'autre support d'emplanture d'ailes pour que l'envergure 49 (illustrée en figure 3) de l'aéronef 10 soit inférieur à la somme de quatre fois la largeur maximale 47 (illustrée en figure 2) des ailes avant 13 et 14 et des ailes arrières 15 et 16, d'une part, et de la largeur 50 du fuselage 11, d'autre part. On note que la largeur 47 des ailes est la plus grande dimension des ailes mesurée perpendiculairement à leur axe principal 43 ou 45. Dans le mode de réalisation représenté en figures 1 à 3, la largeur maximale 47 des ailes avant et arrière se trouve sur les ailes avant 13 et 14.

Ainsi, l'aéronef 10 peut être transporté, voire catapulté, avec une configuration d'ailes resserrée contre le fuselage, avec une envergure minimale. Après catapultage dans cette configuration à envergure minimale, l'envergure est augmentée par rapprochement des emplantures d'ailes 17 et 18.

Comme illustré en figure 4, les supports d'emplanture d'ailes sont préférentiellement positionnés respectivement, en dessous et au-dessus du fuselage 11, cette configuration étant optimale pour plusieurs aspects. On observe aussi en figures 1 à 4 que le fuselage 11 ne porte aucun empennage vertical.

Préférentiellement, comme illustré dans les figures, chacun des supports d'emplanture d'ailes 17 et 18 est mobile le long du fuselage. A cet effet, chaque support d'emplanture d'aile, respectivement 17 et 18, est mis en déplacement sur un rail, respectivement 27 et 28, par un moteur électrique, respectivement 29 et 31, muni d'une vis sans fin, respectivement 30 et 32.

Un boîtier électronique de contrôle 37 (voir figure 3) comporte une unité centrale qui actionne les moteurs 29 et 31 de façon coordonnée. Le boîtier électronique de contrôle 37 assure aussi des fonctions de commandes des surfaces de contrôle 23 à 26 et 33 à 36, de manière connue en soi.

De plus, le boîtier électronique de contrôle constitue un moyen d'adaptation de la position de chaque emplanture d'ailes aux conditions de vol, par exemple à la charge embarquée, à la vitesse, à l'altitude, à l'autonomie visée, à la manœuvrabilité visée. Le moyen d'adaptation modifie la configuration géométrique de la voilure en déplaçant au moins une emplanture d'aile.

Dans des variantes, l'aéronef 10 comporte des moyens de morphisme de la voilure, pour modifier l'inclinaison des axes de rotation des ailes et provoquer une variation d'incidence, le moyen d'adaptation commandant les moyens de morphisme. Préférentiellement, dans ces variantes, le boîtier électronique modifie l'incidence de la voilure au cours du vol, en fonction de la charge embarquée, de la vitesse, de l'altitude, de l'autonomie visée, de la manœuvrabilité visée.

Comme illustré en partie droite de la figure 2 et en figure 7, à chaque jonction 19 et 20 des extrémités d'ailes avant et arrière est positionné une surface verticale de fermeture des extrémités d'ailes 38. Une tringle 39 interne à l'une des ailes, une aile avant dans les figures, maintient le plan principal de la surface verticale de fermeture des extrémités d'ailes 38 parallèle à l'axe principal du fuselage 11.

Comme illustré en figure 7, les jonctions 19 et 20 des extrémités des ailes avant et arrière comportent des pivots. Pour donner un troisième degré de liberté, sur quelques degrés d'angle, cette liaison pivot présente de la souplesse ou une liaison rotule.

Comme illustré en figures 5 et 6, au moins un et préférentiellement les deux, support d'emplanture d'ailes 17 et 18 comporte des pivots et une embase 40 déplacée le long du fuselage 11 par le moteur, respectivement 29 et 31.

On décrit ci-dessous, en regard de la figure 3, un mode de fonctionnement de l'aéronef 10.

Les ailes avant et arrière sont articulées à l'emplanture à leur point d'encastrement avec le fuselage et les ailes avant et arrière droites ainsi que les ailes avant et arrière gauche sont articulées entre elles à leurs extrémités (bord marginaux).

Ce point d'articulation d'emplanture et/ou d'extrémité peut se situer ou non dans le loft aérodynamique de l'aile. Le loft aérodynamique est la surface 3D de l'aéronef qui sert aux études, modélisations et simulations. Ce modèle 3D peut aussi servir à la confection de la maquette pour essais en soufflerie. C'est la version aérodynamique "parfaite" de l'avion qui sera ensuite adaptée aux contraintes de la réalisation, d'utilisation, de maintenance, réglementaire, etc... Il est donc impératif de respecter au mieux cette forme/surface pour avoir un appareil aussi dont les performances sont aussi proche que possible du design "théorique" initial.

Les articulations d'emplanture avec le fuselage peuvent se déplacer d'avant en arrière et de façons indépendantes afin d'obtenir la géométrie désirée tout en respectant les contraintes sur la position du centre de gravité requises par le plan de forme transitionnel et/ou désiré.

Ces articulations d'emplanture, tout en se déplaçant de façon longitudinale peuvent aussi se déplacer vers le haut et/ou vers le bas afin de, par exemple, obtenir l'angle d'incidence adapté en fonction de la flèche de l'aile. On change l'incidence des ailes en fonction de la configuration de la voilure pour que les profils des ailes (section parallèle à l'écoulement) soient toujours dans des valeurs adaptées à cette configuration. Les variations d'angle d'incidence sont, en général, de faible (voir très faible) amplitude. C'est par l'inclinaison des axes de rotation des ailes que cette variation d'incidence s'effectue. On tient aussi compte de l'influence de cette inclinaison sur le dièdre (positif ou négatif). Sur le modèle illustré dans les figures, les variations d'incidence sont de l'ordre de 0,5 degré d'angle sur une plage de variations d'incidence s'étendant jusqu'à cinq degrés d'angle.

L'inclinaison des axes de rotation des ailes à leur encastrement à l'emplanture peut introduire ou supprimer des variations angulaires en incidence. Si cet axe est perpendiculaire au plan de l'aile, le dièdre va naturellement engendrer une variation angulaire de la corde de l'aile par rapport au référentiel de l'écoulement de l'air (la corde d'une aile étant la section correspondante à la coupe de l'aile par un plan vertical perpendiculaire au plan de l'aile et parallèle à l'écoulement/axe longitudinal "X" de l'avion). Il faut s'assurer, dans le cas d'un changement d'incidence introduit par les inclinaisons des axes de rotation, que les variations sont en phase entre les ailes avant et arrière pour minimiser les contraintes éventuelles aux extrémités pouvant être introduites par la géométrie et le choix des degrés de liberté au niveau du mécanisme liant les extrémités des ailes avant et arrière entre elles.

Dans des modes de réalisation, l'aéronef 10 comporte des moyens de morphisme de la voilure, pour modifier l'inclinaison des axes de rotation des ailes et provoquer une variation d'incidence. Dans ces modes de réalisation, on impose aux emplantures des ailes, par l'intermédiaire de leur articulation/encastrement, un moment de torsion et ainsi produire un phénomène de morphisme par l'emploi, par exemple, de matériaux composites et/ou une structure interne adaptée de l'aile.

Le morphisme vise à avoir une structure avec la peau qui se déforme pour remplacer les commandes de vol (ailerons, flaps, etc.) et ainsi de minimiser les trainées (de profile et induites). Sur une aile cantilever, on prévoit une structure réformable interne qui produit la déformation au niveau de la peau (du loft) nécessaire pour obtenir la modification de performance (trainé, portance) désirée/nécessaire. Une autre solution consiste à déformer les peaux à l'aide de courants électromagnétiques.

Dans le cas de la voilure rhomboédrique, du fait de la structure "rigide" de par les contreventements sur les trois axes il est possible d'introduire assez facilement (tel que pour le changement d'incidence) des contraintes dans les extrémités des ailes.

Dans des modes de réalisation, on prévoit une aile dont la structure se "vrille" pour en augmenter (ou diminuer) l'incidence à l'emplanture et/ou à l'extrémité. Ceci permet de modifier la portance de cette aile et ainsi de remplacer les volets. Ces variantes, sont, par exemple, utilisées pour faire les modifications des caractéristiques de l'aile en fonction du régime de vol.

Comme détaillé plus haut, l'inclinaison des axes de rotations autour des points d'encastrement des ailes aux emplantures/extrémités ainsi que le contrôle et l'agencement des degrés de libertés aux encastrements peuvent introduire des contraintes soit dans le sens longitudinal (envergure) soit dans le sens transversal (corde) et ainsi introduire des contraintes en torsion qui, par exemple en jouant sur les angles des axes de rotation et avec une structure adaptée, permettent un vrillage constant ou évolutif sur l'envergure de la voilure. Il peut même être introduit un "flambage" de la voilure sur son envergure, si jugé nécessaire.

L'inventeur a découvert que la configuration rhomboédrique de la voilure permet de garder une finesse quasi constante sur une grande plage de vitesse en faisant varier la cambrure des ailes avant (et arrière pour conserver un vol équilibré). Cette particularité a été confirmée lors d'études en soufflerie. L'utilisation du morphisme des ailes est particulièrement bien adaptée car une faible variation angulaire des ailes avant et arrière peut introduire des variations importantes d'incidence et/ou de variation de cambrure sur leur envergure. Cela permet de limiter l'usage des déflexions des volets, qui ont comme inconvénient la complexité des mixages des huit volets et le manque de précision/résolution des servomoteurs et des commandes mécaniques de ces servomoteurs.

Le morphisme est une solution extrêmement élégante pour "affiner" le réglage de la voilure aux conditions de vol sans avoir l'inconvénient des solutions lourdes et aérodynamiquement peu propres des volets multiples au bord de fuite et/ou les becs et autres appendices au bord d'attaque. La voilure rhomboédrique se prête particulièrement bien à ce type de "contrôle".

Les articulations aux extrémités des ailes, tout en laissant la liberté aux ailes d'obtenir les flèches/plans de forme désirées, peuvent permettre de modifier (ou non) l'espace entre les ailes à leurs extrémités pour optimiser les écoulements aérodynamiques et/ou répondre à des besoins géométriques (par exemple permettre aux ailes de se replier le long du fuselage).

Pour ce qui est de la variation de l'espace entre les ailes à leurs extrémités, elle peut être très intéressante dans le cas de la configuration pour le transport/ et ou le catapultage à partir d'un tube. Par exemple, on prévoit un système de vis sans fin qui fait varier l'espace entre les plans des ailes directement en fonction de la position angulaire des deux ailes l'une par rapport à l'autre (mécaniquement ou de façon asservie).

Il est aussi possible d'imposer aux extrémités des ailes par l'intermédiaire de leur articulation un moment de torsion et ainsi introduire un phénomène de morphisme par l'emploi (par exemple) de matériaux composites et/ou une structure interne adaptée de l'aile.

La fermeture des extrémités des ailes, pour obtenir une aile d'allongement quasiment infini, consiste en une surface aérodynamique verticale (profilée ou non) asservie à l'articulation tout et maintenant cette surface à l'angle d'attaque optimal pour la configuration transitionnelle et/ou opérationnelle. Une des caractéristiques des voilures rhomboédriques est l'absence de surface verticale, donc d'un gain non négligeable en trainée de profil. Cette petite surface verticale qui joint les deux ailes en leurs extrémités permet de fermer l'espace et ainsi, en théorie, d'avoir une aile proche d'une aile à envergure infinie.

Des carénages rigides, semi-rigides et/ou souples peuvent enclore les différentes articulations pour assurer une bonne étanchéité aérodynamique et/ou un écoulement aérodynamique propre.

On note que l'aéronef 10 peut être lancé par une catapulte, des moyens pyrotechniques et/ou un ressort. Le déploiement des ailes en sortie d'un tube de catapultage est effectué en quelques dixièmes de secondes (soit quelques mètres de vol) grâce à des ressorts internes à l'aéronef ou par le jeu de contraintes aérodynamiques s'exerçant sur la voilure.

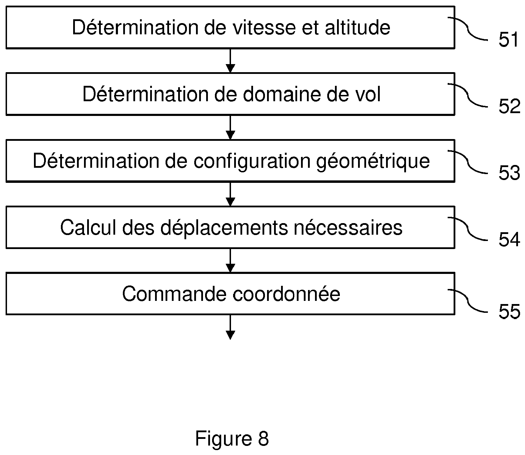

On observe, en figure 8, des étapes de fonctionnement de l'aéronef illustré en figures 1 à 7.

Au cours d'une étape 51, on détermine la vitesse et l'altitude de vol souhaitée, selon les commandes de vol du pilote ou fournies par un logiciel d'optimisation de vol pour la réalisation d'une mission. Au cours d'une étape 52, on détermine du domaine de vol correspondant, en tenant compte de conditions de vol (vitesse, vent, altitude, masse embarquée, autonomie restante ...). Au cours d'une étape 53, on détermine la configuration (angles du dièdre et angle d'incidence) de la voilure pour ce domaine de vol et/ou cette vitesse souhaitée (selon des objectifs de stabilité, de consommation réduite, de manœuvrabilité, ...). Par exemple, partant des connaissances pour certaines configurations géométriques de la voilure, dont les configurations extrêmes (figures 1 et 3), on interpole ces connaissances pour toutes les autres configurations.

Au cours d'une étape 54, on calcule les déplacements des deux emplantures d'ailes pour amener le centre de poussée au lieu souhaité et les déplacements des moyens de morphisme assurant une variation d'angle d'incidence. Au cours d'une étape 55, on commande, de manière coordonnée et simultanée, les moteurs pas-à-pas et les servomoteurs pour que la configuration géométrique de la voilure soit réalisée.

## Revendications

1. Aéronef (10) comportant un fuselage (11) et une voilure (12) rhomboédrique comportant des ailes avant (13, 14) montées sur un support d'emplanture avant (17) et des ailes arrière (15, 16) montées sur un support d'emplanture arrière (18), les ailes avant et arrière se rejoignant en leur extrémité dans un angle dièdre, les supports d'emplanture d'ailes (17, 18) étant positionnés, respectivement, en dessous et au-dessus du fuselage (11), dans lequel :
- une extrémité de chaque aile avant est articulée à une extrémité d'une aile arrière et
- au moins un des supports d'emplanture d'ailes est mobile le long du fuselage.

2. Aéronef (10) selon la revendication 1, dans lequel la longueur (41) des ailes arrières (15, 16) est strictement inférieure à la longueur (48) des ailes avant (13, 14), l'angle (42) formé entre l'axe longitudinal principal (44) du fuselage (11) et l'axe principal (43) des ailes arrières étant en conséquence, dans toutes configurations de vol, plus obtus que l'angle (46) formé entre l'axe longitudinal principal du fuselage et l'axe principal (45) des ailes avant.

3. Aéronef (10) selon la revendication 2, dans lequel au moins un des supports d'emplanture d'ailes (17, 18) est configuré pour se rapprocher de l'autre support d'emplanture d'ailes pour que les ailes avant (13, 14) forment les hypoténuses de triangles rectangles formés par les ailes avant, les ailes arrières (15, 16) et le fuselage (11), l'axe principal (43) de chacune des ailes arrières étant, dans ces triangles rectangles, perpendiculaire à l'axe principal longitudinal (44) du fuselage.

4. Aéronef (10) selon l'une des revendications 2 ou 3, dans lequel au moins un des supports d'emplanture d'ailes (17, 18) est configuré pour se rapprocher de l'autre support d'emplanture d'ailes pour que les ailes avant (13, 14) et les ailes arrières (15, 16) soient en flèches, non inversées.

5. Aéronef (10) selon l'une des revendications 1 à 4, dans lequel au moins un des supports d'emplanture d'ailes (17, 18) est configuré pour s'éloigner de l'autre support d'emplanture d'ailes pour que l'envergure (49) de l'aéronef soit inférieur à la somme de quatre fois la largeur maximale (47) des ailes avant (13, 14) et des ailes arrières (15, 16), d'une part, et de la largeur (50) du fuselage (11), d'autre part.

6. Aéronef (10) selon l'une des revendications 1 à 5, qui comporte un moyen d'adaptation (37) de la position de chaque emplanture d'ailes (17, 18) aux conditions de vol.

7. Aéronef (10) selon la revendication 6, qui comporte des moyens de morphisme de la voilure (12), pour modifier l'inclinaison des axes de rotation d'ailes (13 à 16) et provoquer une variation d'incidence, le moyen d'adaptation (37) commandant les moyens de morphisme.

8. Aéronef (10) selon l'une des revendications 1 à 7, dans lequel chacun des supports d'emplanture d'ailes (17, 18) est mobile le long du fuselage (12).

9. Aéronef (10) selon l'une des revendications 1 à 8, dans lequel, à chaque jonction (19, 20) des extrémités d'ailes avant et arrière est positionné une surface verticale (38) de fermeture des extrémités d'ailes.

10. Aéronef (10) selon la revendication 9, dans lequel une tringle (39) interne à l'une des ailes maintient le plan principal de la surface verticale (38) de fermeture des extrémités d'ailes parallèle à l'axe principal du fuselage (12).

11. Aéronef (10) selon l'une des revendications 1 à 10, dans lequel les jonctions (19, 20) des extrémités des ailes avant et arrière comportent des pivots.

12. Aéronef (10) selon l'une des revendications 1 à 11, dans lequel au moins un support d'emplanture (17, 18) d'ailes comporte au moins un pivot.

13. Aéronef (10) selon l'une des revendications 1 à 12, dans lequel le fuselage (12) ne porte aucun empennage vertical.

## Patentansprüche

1. Luftfahrzeug (10), umfassend einen Rumpf (11) und eine rhomboedrische Tragfläche (12), umfassend vordere Flügel (13, 14), die auf einer vorderen Flügelwurzel (17) montiert sind, und hintere Flügel (15, 16), die auf einer hinteren Flügelwurzel (18) montiert sind, wobei die vorderen und hinteren Flügel in einem Diederwinkel an ihrem Ende zusammenlaufen, wobei die Flügelwurzel-Träger (17, 18) jeweils unterhalb und oberhalb des Rumpfes (11) positioniert sind, bei dem:
- ein Ende jedes vorderen Flügels an einem Ende eines hinteren Flügels artikuliert ist und
- wenigstens einer der Flügelwurzel-Träger entlang des Rumpfes beweglich ist.

2. Luftfahrzeug (10) gemäß Anspruch 1, bei dem die Länge (41) der hinteren Flügel (15, 16) deutlich kürzer ist als die Länge (48) der vorderen Flügel (13, 14), wobei der Winkel (42), der zwischen der Haupt-Längsachse (44) des Rumpfes (11) und der Haupt-Längsachse (43) der hinteren Flügel gebildet ist, infolgedessen in allen Flugausgestaltungen stumpfer ist als der Winkel (46), der zwischen der Haupt-Längsachse des Rumpfes und der Hauptachse (45) der vorderen Flügel gebildet ist.

3. Luftfahrzeug (10) gemäß Anspruch 2, bei dem wenigstens einer der Flügelwurzel-Träger (17, 18) ausgestaltet ist, um sich dem anderen Flügelwurzel-Träger anzunähern, damit die vorderen Flügel (13, 14) die rechtwinkligen Dreieckshypotenusen bilden, die von den vorderen Flügeln, den hinteren Flügeln (15, 16) und dem Rumpf (11) gebildet sind, wobei die Hauptachse (43) jedes der hinteren Flügel in diesen rechtwinkligen Dreiecken lotrecht zur Haupt-Längsachse (44) des Rumpfes ist.

4. Luftfahrzeug (10) gemäß einem der Ansprüche 2 oder 3, bei dem wenigstens einer der Flügelwurzel-Träger (17, 18) ausgestaltet ist, um sich dem anderen Flügelwurzel-Träger anzunähern, damit die vorderen Flügel (13, 14) und die hinteren Flügel (15, 16) raketenartig, nicht vertauscht sind.

5. Luftfahrzeug (10) gemäß einem der Ansprüche 1 bis 4, bei dem wenigstens einer der Flügelwurzel-Träger (17, 18) ausgestaltet ist, um sich von dem anderen Flügelwurzel-Träger zu entfernen, damit die Flügelspanne (49) des Luftfahrzeugs kleiner ist als die Summe der viermaligen maximalen Breite (47) der vorderen Flügel (13,1 4) und der hinteren Flügel (15, 16) einerseits und der Breite (50) des Rumpfes (11) andererseits.

6. Luftfahrzeug (10) gemäß einem der Ansprüche 1 bis 5, das ein Anpassungsmittel (37) der Position jeder Flügelwurzel (17, 18) an die Flugbedingungen umfasst.

7. Luftfahrzeug (10) gemäß Anspruch 6, das Morphismusmittel der Tragfläche (12) zum Abändern der Neigung der Drehachsen der Flügel (13 bis 16) und zum Hervorrufen einer Einfallsvariation umfasst, wobei das Anpassungsmittel (37) die Morphismusmittel steuert.

8. Luftfahrzeug (10) gemäß einem der Ansprüche 1 bis 7, bei dem jeder der Flügelwurzel-Träger (17, 18) entlang des Rumpfes (12) beweglich ist.

9. Luftfahrzeug (10) gemäß einem der Ansprüche 1 bis 8, bei dem an jeder Verbindung (19, 20) der vorderen und hinteren Flügelenden eine vertikale Verschlussfläche (38) der Flügelenden positioniert ist.

10. Luftfahrzeug (10) gemäß Anspruch 9, bei dem eine innere Stange (39) an einem der Flügel die Hauptebene der vertikalen Verschlussoberfläche (38) der zur Hauptachse des Rumpfes (12) parallelen Flügelenden hält.

11. Luftfahrzeug (10) gemäß einem der Ansprüche 1 bis 10, bei dem die Verbindungen (19, 20) der vorderen und hinteren Flügelenden Drehpunkte umfassen.

12. Luftfahrzeug (10) gemäß einem der Ansprüche 1 bis 11, bei dem wenigstens ein Flügelwurzel-Träger (17, 18) wenigstens einen Drehpunkt umfasst.

13. Luftfahrzeug (10) gemäß einem der Ansprüche 1 bis 12, bei dem der Rumpf (12) kein vertikales Flugwerk trägt.

## Claims

1. Aircraft (10) comprising a fuselage (11) and a rhombohedral wing structure (12) comprising front wings (13, 14) mounted on a front wing-root support (17) and rear wings (15, 16) mounted on a rear wing-root support (18), the front and rear wings meeting at their ends with a dihedral angle, the wing-root supports (17, 18) being positioned respectively under and on the top of the fuselage (11), wherein:
- one end of each front wing is articulated to one end of a rear wing and
- at least one of the wing-root supports is able to move along the fuselage.

2. Aircraft (10) according to claim 1, wherein the length (41) of the rear wings (15, 16) is strictly shorter than the length (48) of the front wings (13, 14), the angle (42) formed between the main longitudinal axis (44) of the fuselage (11) and the main axis (43) of the rear wings therefore being, in all flight configurations, more obtuse than the angle (46) formed between the main longitudinal axis of the fuselage and the main axis (45) of the front wings.

3. Aircraft (10) according to claim 2, wherein at least one of the wing-root supports (17, 18) is configured to come closer to the other wing-root support so that the front wings (13, 14) form the hypotenuses of right-angle triangles formed by the front wings, the rear wings (15, 16) and the fuselage (11), the main axis (43) of each of the rear wings being, in these right-angle triangles, perpendicular to the main longitudinal axis (44) of the fuselage.

4. Aircraft (10) according to one of claims 2 or 3, wherein at least one of the wing-root supports (17, 18) is configured to come closer to the other wing-root support so that the front wings (13, 14) and the rear wings (15, 16) are in swept-back configurations.

5. Aircraft (10) according to one of claims 1 to 4, wherein at least one of the wing-root supports (17, 18) is configured to move away from the other wing-root support so that the span (49) of the aircraft is less than the sum of four times the maximum width (47) of the front wings (13, 14) and the rear wings (15, 16), firstly, and the width (50) of the fuselage (11), secondly.

6. Aircraft (10) according to one of claims 1 to 5, which comprises a means (37) for adjusting the position of each wing root (17, 18) to suit the flight conditions.

7. Aircraft (10) according to claim 6, which comprises means for morphing the wing structure (12), to alter the inclination of the axes of rotation of wings (13 to 16) and cause a variation of incidence, the adjustment means (37) controlling the morphing means.

8. Aircraft (10) according to one of claims 1 to 7, wherein each of the wing-root supports (17, 18) is able to move along the fuselage (12).

9. Aircraft (10) according to one of claims 1 to 8, wherein, a vertical surface (38) for closing wing ends is positioned at each junction (19, 20) of the front and rear wing ends.

10. Aircraft (10) according to claim 9, wherein a rod (39) inside one of the wings keeps the main plane of the vertical surfaces (38) for closing wing ends parallel to the main axis of the fuselage (12).

11. Aircraft (10) according to one of claims 1 to 10, wherein the junctions (19, 20) of the front and rear wing ends comprise pivots.

12. Aircraft (10) according to one of claims 1 to 11, wherein at least one front wing-root support (17, 18) comprises at least one pivot.

13. Aircraft (10) according to one of claims 1 to 12, wherein the fuselage (12) has no vertical tail.
